(19) **Europäisches Patentamt / European Patent Office / Office européen des brevets**

(11) **EP 2 886 853 B1**

(12) **EUROPEAN PATENT SPECIFICATION**

(45) Date of publication and mention
of the grant of the patent:
**04.05.2016  Bulletin 2016/18**

(51) Int Cl.:
*F03D 80/00* *(2016.01)*    *F03D 7/02* *(2006.01)*

(21) Application number: **14156679.4**

(22) Date of filing: **26.02.2014**

(54) **A monitoring system and a monitoring method for a wind turbine generator**

Überwachungssystem und Überwachungsverfahren für einen Windturbinengenerator

Système et procédé de surveillance pour un aérogénérateur

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.12.2013  JP 2013263610**

(43) Date of publication of application:
**24.06.2015  Bulletin 2015/26**

(73) Proprietor: **MITSUBISHI HEAVY INDUSTRIES,
LTD.**
**Tokyo 108-8215 (JP)**

(72) Inventors:
 • **Karikomi, Kai**
  **Tokyo, 108-8215 (JP)**
 • **Matsuo, Toru**
  **Tokyo, 108-8215 (JP)**

(74) Representative: **Intès, Didier Gérard André et al
Cabinet Beau de Loménie
158, rue de l'Université
75340 Paris Cedex 07 (FR)**

(56) References cited:
 **EP-A1- 2 320 077    US-A1- 2013 062 880**

Printed by Jouve, 75001 PARIS (FR)

## Description

[Technical Field]

The present disclosure relates to a monitoring system and a monitoring method for monitoring a wind turbine generator.

[Background Art]

In recent years, from the perspective of preserving the environment, a wind turbine generator which generates electrical power using wind energy has attracted attention. Generally, a wind turbine generator includes a rotor where a plurality of blades are attached to a hub, and a generator which is configured to be driven by rotation energy of the rotor which rotates upon receiving wind.

Wind conditions received by a wind turbine generator normally vary due to the influence of the terrain and the like. When an actual wind condition is more severe than the design assumption, the fluctuating load received by the wind turbine generator increases. Thus, there is a possibility for each component of the wind turbine generator (a blade, nacelle, tower or auxiliary machine, for instance) to be damaged before the time expected in design, thus hastening the time for replacement. In the case where unexpected damage is caused, there is a concern of the occurrence of downtime for taking time to arrange the parts and work for replacement, which leads to increase in the loss of the operator or the manufacturer.

As a countermeasure thereof, a method of monitoring the load real time by providing a load measurement device for a wind turbine generator is known. For example, WO2011/024304A discloses a method of measuring distortion changes in a wind turbine generator using strain gauges or optical fibers as a load measurement device, and then, using the above measured data, monitoring the state related to integrity of the wind turbine generator by comparing the load acting on the wind turbine generator to a normal value.

Document US2013/0062880 shows another prior art system that takes into account wind conditions in order to calculate fatigue loads. This system uses LIDAR as only sensor for wind parameters.

SUMMARY

[Technical problem]

Although the conventional methods using a load measurement device are capable of directly monitoring the fluctuating load which is actually received by each of wind turbine generators, the methods have following disadvantages.

First, as a load measurement device is expensive, there is a problem of the high installation cost. Especially, in the case of a large-scaled wind turbine generating facility such as a wind farm, as wind conditions vary by each of the wind turbine generators, it is required to provide a load measurement device for each of the wind turbine generators, thus elevating the overall cost for installation. Also, in the case where a load measurement device is used, regular maintenance and calibration is required, which requires cumbersome procedures and also increases the running cost. Moreover, yet another problem is that, as a load measurement device tends to produce a false signal due to its delicate characteristics, it is difficult to secure reliability of monitoring accuracy.

In this regard, an object of at least one embodiment of the present invention is to provide a monitoring system and a monitoring method for a wind turbine generator which are capable of determining the fatigue load received by the wind turbine generator with a simple and convenient device configuration.

A monitoring system for a wind turbine generator according to at least one embodiment of the present invention comprises:

a wind speed obtaining unit for obtaining a wind speed;

a wind condition identifying unit for identifying a wind condition parameter which includes at least one of a wind shear or an upflow angle of a wind which acts on a rotor of the wind turbine generator based on the wind speed obtained by the wind speed obtaining unit and at least one of a power output or a pitch angle of the wind turbine generator measured upon occurrence of the wind speed; and

a fatigue load calculating unit for calculating a fatigue load of a component of the wind turbine generator based on at least the wind condition parameter identified by the wind condition identifying unit and a wind turbulence intensity of the wind which acts on the rotor.

In one embodiment, "a power output or a pitch angle of the wind turbine generator measured upon occurrence of the wind speed" is a power output or a pitch angle of the wind turbine generator around the time when the wind speed is obtained by the wind speed obtaining unit.

The monitoring system for a wind turbine generator calculates a fatigue load of a component of the wind turbine generator at the fatigue load calculating unit using: a wind turbulence intensity, that is one of the factors which influence fatigue strength of the wind turbine generator; and in addition a wind condition parameter including at least one of a wind shear or an upflow angle. For instance, in the presence of a wind shear, as the relative flow velocity vector to a blade cross-section changes during one rotation of the blade, an aerodynamic load which acts on the blade cyclically changes. As a result, loads act on a component of the wind turbine generator repeatedly, increasing the fatigue load of the component of the wind turbine generator. Likewise, the upflow angle is also a cause of loads which occur repeatedly due to rotation of the blade. Thus, the above monitoring system for a wind turbine generator identifies conditions of the wind acting on the monitored wind turbine generator (a wind condition parameter), and then calculate the fatigue load of a component of the wind turbine generator based on the wind condition parameter. As a result, it is possible to determine the fatigue load received by the monitored wind turbine generator with a simple and convenient device configuration without using a load measurement device.

Also, the monitoring system for a wind turbine generator identifies a wind condition parameter at the wind condition identifying unit based on the wind speed and at least one of the power output or the pitch angle of the wind turbine generator, the wind condition parameter including at least one of a wind shear or an upflow angle. Generally, the power output of a wind turbine generator dynamically changes by wind energy which flows into the rotor plane. Then, in a normal operation, the pitch angle of the blade is controlled so as to obtain the predetermined power output corresponding to the change of the wind energy. As the wind energy which flows into the rotor plane depends on not only the wind speed but also on the wind condition parameter which includes at least one of the wind shear or the upflow angle, the wind energy, that is, the wind speed and the wind condition parameter, is correlated to the power output or the pitch angle of the wind turbine generator, vice versa. With the correlation, it is possible to identify the wind condition parameter which includes at least one of the wind shear or the upflow angle based on the wind speed and at least one of the power output or the pitch angle of the wind turbine generator without using many anemometers.

As describe above, with the monitoring system for a wind turbine generator, it is possible to determine the fatigue load of a component of the monitored wind turbine generator without using a load measurement device by using a monitoring data of the status of the wind turbine generator such as the wind speed, the power output, the pitch angle, and the like.

In some embodiments, the wind parameter identifying unit is configured to identify the wind condition parameter by applying the wind speed obtained by the wind obtaining unit and at least one of the power output or the pitch angle measured upon occurrence of the wind speed to a correlation among: the wind speed; at least one of the power output or the pitch angle of the wind turbine generator; and the wind condition parameter including at least one of the wind shear or the upflow angle of the wind which acts on the rotor.

By utilizing a correlation among the wind speed, at least one of the power output or the pitch angle of the wind turbine generator, and the wind condition parameter including at least one of the wind shear or the upflow angle, it is possible to easily identify a wind condition parameter from the wind speed obtained by the wind speed obtaining unit and at least one of the corresponding power output or pitch angle.

In some embodiment, the wind condition identifying unit is configured to identify the wind condition parameter based on the wind turbulence intensity of the wind which acts on the rotor in addition to the wind speed and at least one of the power output or the pitch angle of the wind turbine generator measured upon occurrence of the wind speed.

A wind condition parameter which includes at least one of the wind shear or the upflow angle of the wind which acts on the rotor of the wind turbine generator is influenced by a wind turbulence intensity of the wind which acts on the rotor. Thus, by identifying the wind condition parameter at the wind condition identifying unit with the wind turbulence intensity also under consideration, it is possible to improve monitoring accuracy of the fatigue load.

In one embodiment, the wind parameter identifying unit is configured to identify the wind condition parameter based on at least a first correlation of the wind speed and the power output where the power output is not greater than a rated power output of the wind turbine generator.

When the power output of a wind turbine generator is not greater than the rated power output, the power output of the wind turbine generator changes from hour to hour due to the wind energy which flows into the rotor plane as described above. Thus, the change of a wind condition parameter being one of the factors which influence wind energy is clearly reflected in the change of the power output which corresponds to the wind speed. Accordingly, when the power output of a wind turbine generator is not greater than the rated power output, the change of the wind condition parameter appears in the change of the power output which corresponds to the wind speed. As a result, it is possible to identify a wind condition parameter by considering at least the first correlation between the wind speed and the power output where the power output of the wind turbine generator is not greater than the rated power output. That is, as the power output varies by different wind condition parameters even when the wind speed is constant, it is possible to identify a wind condition parameter by focusing on such a relation between the wind speed and the power output (the first correlation).

In one embodiment, the wind parameter identifying unit is configured to identify the wind condition parameter based on at least a second correlation of the wind speed and the pitch angle where the power output is not less than a rated power output of the wind turbine generator.

In a typical wind turbine generator, under a rated power output operation, the power output is controlled to be constant by the pitch angle control. Thus, the change of the speed and the wind condition parameter, each of which being a factor influencing wind energy, appears in the change of the pitch angle. Thus, it is possible to identify the wind condition parameter by considering at least the second correlation between the wind speed and the pitch angle where the power output of the wind turbine generator is not less than the rated power output. That is, as the pitch angle varies by different wind condition parameters even when the wind speed is constant, it is possible to identify a wind condition parameter by focusing on such a relation between the wind speed and the pitch angle (the second correlation).

The monitoring system for a wind turbine generator according to some embodiment comprises a lifetime estimating unit for estimating a lifetime of the component based on the fatigue load calculated by the fatigue load calculating unit.

As a result, it is possible to perform estimation of the lifetime of the component with high accuracy by utilizing the fatigue load of a component of a wind turbine generator calculated considering the condition of the wind which acts on the monitored wind turbine generator (the wind condition parameter).

In some embodiments, the monitoring system for a wind turbine generator further comprises a maintenance information outputting unit for outputting information which encourages maintenance of the component based on the lifetime estimated by the lifetime estimating unit.

As a result, it is possible to perform maintenance at an appropriate time.

In some embodiments, the wind speed obtaining unit is configured to obtain the wind speed based on a measured result of an anemometer provided for a nacelle of the wind turbine generator.

As a result, by obtaining the wind speed based on a measured result of an anemometer provided for a nacelle (that is, at a position close to the rotor plane), it is possible to calculate the fatigue load of even higher accuracy.

A monitoring system for a wind farm according to at least one embodiment of the present invention comprises:

a wind speed obtaining unit for obtaining a wind speed for each of wind turbine generators belonging to the wind farm;
a wind condition identifying unit for identifying a wind condition parameter for each of the wind turbine generators based on the wind speed obtained by the wind speed obtaining unit and at least one of a power output or a pitch angle of each of the wind turbine generators measured upon occurrence of the wind speed, the wind condition parameter including at least one of a wind shear or an upflow angle of a wind which acts on a rotor of each of the wind turbine generators; and
a fatigue load calculating unit for calculating a fatigue load of a component of each of the wind turbine generators based on at least the wind condition parameter identified by the wind condition identifying unit and a wind turbulence intensity of the wind which acts on the rotor.

With the monitoring system for a wind farm, it is possible to determine the fatigue load of a component of the monitored wind turbine generator without using a load measurement device by using a monitoring data of the status of each wind turbine generator of the wind farm such as the wind speed, the power output, the pitch angle, and the like.

A monitoring method for a wind turbine generator according to at least one embodiment of the present invention comprises:

a wind speed obtaining step of obtaining a wind speed;
a wind condition identifying step of identifying a wind condition parameter which includes at least one of a wind shear or an upflow angle of a wind which acts on a rotor of the wind turbine generator based on the wind speed obtained in the wind speed obtaining step and at least one of a power output or a pitch angle of the wind turbine generator measured upon occurrence of the wind speed; and
a fatigue load calculating step of calculating a fatigue load of a component of the wind turbine generator based on at least the wind condition parameter identified in the wind condition identifying step and a wind turbulence intensity of the wind which acts on the rotor.

In the monitoring method of a wind turbine generator, in the wind condition identifying step, a condition of the wind which acts on the monitored wind turbine generator (the wind condition parameter) is identified, and then, in the fatigue load calculating step, the fatigue load of a component of the wind turbine generator is calculated based on the wind condition parameter. As a result, it is possible to determine the fatigue load of the monitored wind turbine generator with a simple and convenient device configuration which does not include a fatigue load measurement device.

Also, in the monitoring method for a wind turbine generator, in the wind condition identifying step, based on the wind speed and at least one of the power output or the pitch angle of the wind turbine generator, the wind condition parameter which includes at least one of the wind shear or the upflow angle is determined. As a result, it is possible to identify a wind condition parameter which includes at least one of the wind shear and the upflow angle based on the wind speed and at least one of the power output or the pitch angle of the wind turbine generator without using many anemometers.

Accordingly, with the above monitoring method of a wind turbine generator, it is possible to determine the fatigue load of a component of the monitored wind turbine generator without using a load measurement device by using a monitoring data of the status of the wind turbine generator such as the wind speed, the power output, the pitch angle, and the like.

[Advantageous Effect]

According to at least one embodiment of the present invention, it is possible to adopt a device configuration which is simplified so as not to include a load measurement device and to determine the fatigue load of a component of a monitored wind turbine generator using a monitoring data of the status of the wind turbine generator such as the wind speed, the power output, the pitch angle, and the like.

BRIEF DESCRIPTION OF DRAWINGS

[FIG. 1] Fig. 1 is an illustration of a configuration of a wind turbine generator and a monitoring system according to one embodiment.
[FIG. 2] Fig. 2 is an illustration of an inflow wind to a rotor plane of a wind turbine generator.
[FIG. 3] Fig. 3 is an illustration of a wind shear.
[FIG. 4] Fig. 4 is an illustration of an output curve of a wind turbine generator.
[FIG. 5A] Fig. 5A is an illustration of an output curve corresponding to a power law exponent.
[FIG. 5B] Fig. 5B is an illustration of a correlation between wind speed and pitch angle corresponding to a power law exponent.
[FIG. 6A] Fig. 6A is an illustration of an exemplary configuration of a first correlation table.
[FIG. 6B] Fig. 6B is an illustration of an exemplary configuration of a second correlation table.
[FIG. 7] Fig. 7 is an illustration of an exemplary configuration of a fatigue load table.
[FIG. 8] Fig. 8 is an illustration of an exemplary configuration of a maintenance time table.
[FIG. 9] Fig. 9 is a flow chart of a monitoring method of a wind turbine generator according to one embodiment.

DETAILED DESCRIPTION

At least one embodiment of the present invention will now be described in detail with reference to the accompanying drawings. It is intended, however, that unless particularly specified, dimensions, materials, shape, its relative positions and the like shall be interpreted as illustrative only and not limitative of the scope of the present invention.

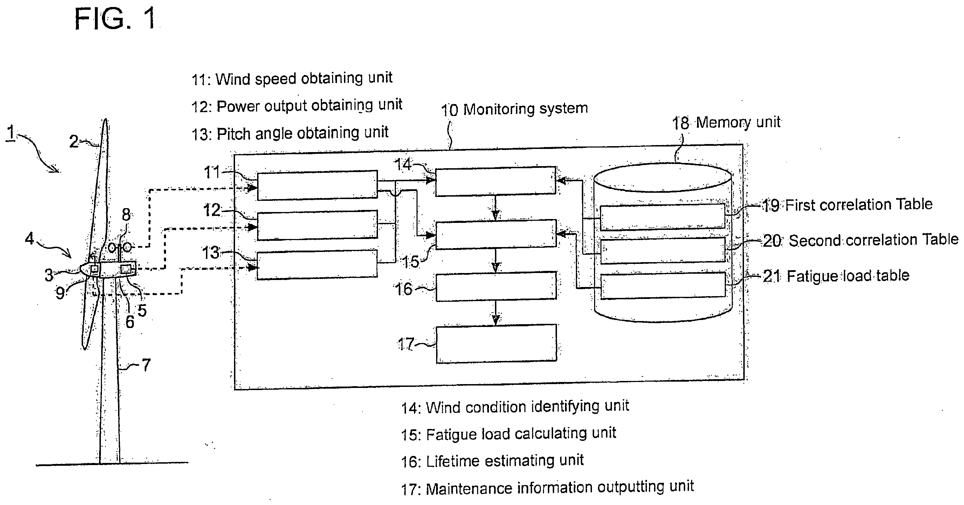

Fig. 1 is an illustration of a configuration of a wind turbine generator and a monitoring system according to one embodiment.

In Fig. 1, illustrated is an exemplary configuration of a wind turbine generator 1 to which a monitoring system 10 according to the embodiment is applied. The wind turbine generator 1 includes a rotor 4 which has at least one blade 2 and a hub 3, and a generator 5 which is configured to be driven by rotation energy of the rotor 4, a nacelle 6 which rotatably supports the rotor 4, and a tower 7 to which the nacelle 6 is attached. The wind turbine generator 1 may be provided either on the ground or on the ocean.

In one embodiment, the wind turbine generator 1 further includes an anemometer 8 provided at an upper part of the nacelle 6 and a pitch angle control mechanism 9 for controlling a pitch angle of the blade 2. In the case where a remote monitoring system (for example, SCADA; Supervisory Control And Data Acquisition) for remotely monitoring the wind turbine generator 1 is provided, a wind speed data from the anemometer 8, a pitch angle control data by the pitch angle control system 9, and a power output data of the generator 5 (a power output data of the wind turbine generator 1) may be collected by the remote monitoring system. Herein, a case where the anemometer 8 is provided for the nacelle 6 is illustrated. In this case, by obtaining the wind speed based on a measured result of the anemometer 8 provided at the nacelle 6 (that is, a position close to the rotor plane), the configuration has an advantage of being capable of calculating a fatigue load of higher accuracy by the calculation described below. However, the anemometer 8 may be provided for another part of the wind turbine generator or for an observation tower disposed near the wind turbine generator 1. Also, the mechanism of measurement by the anemometer 8 is not particularly limited. For instance, a cup anemometer or a Doppler Lidar may be used.

The monitoring system 10 according to the embodiment is, for instance, configured by a computer composed of a central processing unit (CPU), a memory, an external memory and an input/output unit, the monitoring system 10 being capable of performing the following predetermined functions by executing the program stored in the external memory. The monitoring system 10 may be provided for the wind turbine generator 1 or a remote place from the wind turbine generator 1. In the latter case, each kind of data can be transmitted and received via a communication line.

In some embodiment, the monitoring system 10 includes a wind obtaining unit 11, at least one of a power output obtaining unit 12 or a pitch angle obtaining unit 13, a wind condition identifying unit 14, a fatigue load calculation unit 15, and a memory unit 18. The monitoring system 10 may further include a lifetime estimating unit 16 and a maintenance information outputting unit 17.

Configuration of each unit will be described below in detail.

The wind obtaining unit 11 is configured to obtain a wind speed of the wind turbine generator 1. In one embodiment, the wind speed obtaining unit 11 obtains a statistic of the wind speed in a predetermined time, which is regarded as the wind speed in the calculation described below. In the case where a value measured by the anemometer 8 provided for the nacelle 6 is obtained as a wind speed by the wind speed obtaining unit 11, a value measured by the anemometer 8 may be corrected to be used as a wind speed. For instance, in the case where the wind turbine generator 1 is of an upwind type, as the rotor 4 may block the wind flow to the anemometer 8 provided for the nacelle 6, it is possible to obtain more accurate wind speed by correcting a value measured by the anemometer 8. As a statistic of wind speed, an average wind speed of the wind speed measured by the anemometer 8 in a predetermined time is used, for instance. Also, the wind speed obtaining unit 11 may obtain a wind turbulence intensity of the wind which acts on the rotor 4. A wind turbulence intensity is a fluctuation component of the wind speed, and is treated as a statistic defined by a standard variation of the wind speed fluctuation. The wind turbulence intensity can be regarded as being constant over the rotor plane, and thus it is possible to derive a wind turbulence intensity from the wind speed measured by the anemometer 8.

The power output obtaining unit 12 is configured to obtain the power output of the wind turbine generator 1.

The pitch angle obtaining unit 13 is configured to obtain the pitch angle of the blade 2.

In the case where the remote monitoring system is provided, the monitoring system 10 may receive the wind speed and the wind turbulence intensity obtained in the wind speed obtaining unit 11, the power output of the wind turbine generator 1 obtained in the power output obtaining unit 12, and the pitch angle obtained in the pitch angle obtaining unit 13 via the remote monitoring system.

In the memory unit 18, stored is a correlation among the wind speed obtained in the wind speed obtaining unit 11, at least one of the power output or the pitch angle or the wind turbine generator 1, and the wind condition parameter which includes at least one of the wind shear or the upflow angle of the wind which acts on the rotor 4. As the correlation, the memory unit 18 may store: a first correlation table 19 showing a first correlation between the wind speed and the power output where the power output is not greater than the rated power output of the wind turbine generator 1; and a second correlation table 20 showing a second correlation between the wind speed and the pitch angle where the power output is not less than the rated power output of the wind turbine generator 1. Further, the memory unit 18 may store a fatigue load table 21 showing a correlation between the wind speed and the fatigue load. Herein, the first correlation table 19, the second correlation table 20, and the fatigue load table 21 may be provided with respect to each wind turbulence intensity.

The wind condition identifying unit 14 identifies a wind condition parameter which includes at least one of a wind shear or an upflow angle of the wind which acts on the rotor 4 of the wind turbine generator 1 based on the wind speed obtained by the wind speed obtaining unit 11 and at least one of the power output or the pitch angle of the wind turbine generator 1 measured upon occurrence of the wind speed. In one embodiment, "a power output or a pitch angle of the wind turbine generator 1 measured upon occurrence of the wind speed" is a power output or a pitch angle of the wind turbine generator 1 around the time when the wind speed is obtained by the wind speed obtaining unit 11. Also, the wind condition identifying unit 14 may be configured to identify the wind condition parameter by applying the wind speed obtained by the wind speed obtaining unit 11 and at least one of the power output and the pitch angle measured upon occurrence of the wind speed to a correlation stored in the memory unit 18. In this manner, at the wind identifying unit 14, by utilizing a correlation among the wind speed, at least one of the power output or the pitch angle of the wind turbine generator 1, and the wind condition parameter including at least one of the wind shear or the upflow angle, it is possible to easily identify a wind condition parameter from the wind speed obtained by the wind speed obtaining unit 11 and at least one of the power output or the pitch angle which corresponds to the wind speed.

Further, the wind condition identifying unit 14 may be configured to identify the wind condition parameter based on the wind turbulence intensity obtained at the wind speed obtaining unit 11 in addition to the wind speed obtained at the wind speed obtaining unit 11 and at least one of the output power or the pitch angle of the wind turbine generator 1 measured upon occurrence of the wind speed. A wind condition parameter which includes at least one of the wind shear or the upflow angle of the wind which acts on the rotor 4 of the wind turbine generator 1 is influenced by a wind turbulence intensity of the wind which acts on the rotor 4. Thus, by identifying the wind condition parameter with the wind turbulence intensity also considered at the wind condition identifying unit 14, it is possible to improve monitoring accuracy of the fatigue load at the monitoring system 10.

The fatigue load calculating unit 15 is configured to calculate the fatigue load of a component of the wind turbine generator 1 (the blade 2, the nacelle 6, the tower 7 or an auxiliary machine, for instance) based on at least the wind condition parameter identified at the wind condition identifying unit 14 and the wind turbulence intensity of the wind which acts on the rotor 4. The measured fatigue load may be outputted as a data from an outputting unit (not shown) or may be stored in the memory unit 18 to be used as needed for calculation of the lifetime or the like.

The monitoring system 10 which includes the above configuration is mainly intended to calculate the fatigue load of a component of the wind turbine generator 1. For instance, in the case where a fatigue load has exceeded a design load of the wind turbine generator 1, there is a possibility for occurrence of a breakdown or a trouble of the wind turbine generator before expiration of the durable period which has been considered at the time of design. Thus, it is desirable to perform such control that reduces the fatigue load or such maintenance where the fatigue load is taken into account. In order to carry out the above countermeasures, it is important to determine the fatigue load of the wind turbine generator 1. Therefore, the wind turbine generator 1 according to the embodiment is configured to be capable of determining the fatigue load received by the wind turbine generator 1 with a simple and convenient device configuration.

The function of the monitoring system 10 according to the embodiment will be described below in detail.

The fatigue load which acts on the wind turbine generator 1 includes a load caused by wind energy which flows into the rotor plane of the wind turbine generator 1. Especially, among the wind energy, the wind turbulence intensity at the rotor plane and the wind condition parameter which includes the wind shear and the upflow angle are the factors having great influence on the fatigue load which acts on the wind turbine generator 1. For instance, in the presence of the wind shear, as the relative flow velocity vector to a blade cross-section changes during a single rotation of the blade 2, the aerodynamic load which acts on the blade cyclically changes. As a result, loads act on components of the wind turbine generator 1 repeatedly, which increases the fatigue load of the components of the wind turbine generator 1. Likewise, the upflow angle is also a cause of loads which occur repeatedly due to rotation of the blade. Thus, in the embodiment, the fatigue load of a component of the wind turbine generator 1 is calculated using the wind turbulence intensity at the rotor plane and additionally the wind condition parameter which includes at least one of the wind shear or the upflow angle.

In one embodiment, when calculating the fatigue load of a component of the wind turbine generator 1, a wind condition parameter which includes at least one of the wind shear or the upflow angle is identified at the beginning. The following description illustrates the case where a wind shear is used as a wind condition parameter for calculating the fatigue load while a power output and a pitch angle are used for identifying the wind condition parameter. However, an upflow angle, or both of the wind shear and the upflow angle may be used as the wind condition parameter for calculating the fatigue load. Also, either one of the power output and the pitch angle alone can be used for identifying the wind condition parameter.

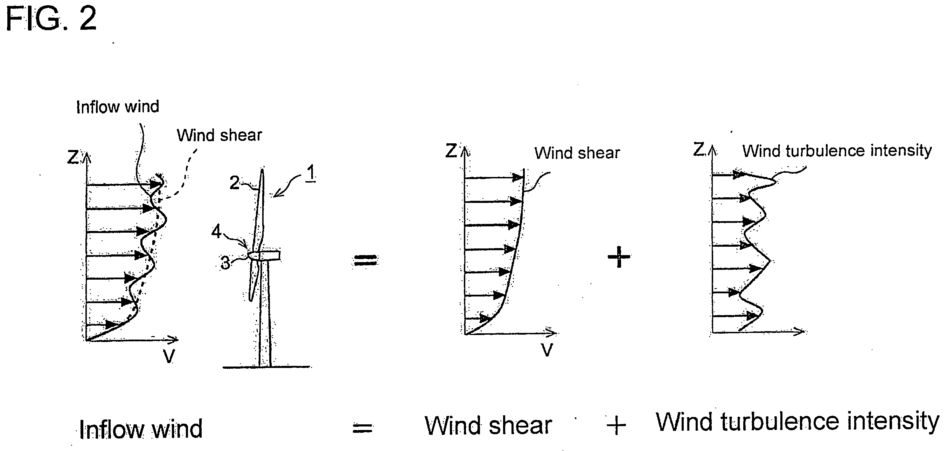

Fig. 2 is an illustration for describing an inflow wind to a rotor plane of a wind turbine generator 1.

As shown in the drawing, an inflow wind to the rotor plane of the wind turbine generator 1 normally has wind speed V which varies in the height direction Z. The inflow wind can be divided into a wind shear which is a space distribution of the average wind speed and a wind turbulence intensity which is a fluctuation component of the average wind speed. As described above, as the wind turbulence intensity can be regarded as being constant over the rotor plane, it is possible to derive the wind turbulence intensity from the wind speed measured by the anemometer 8. On the other hand, it is not possible to obtain the wind shear by the single-point measurement of the anemometer 8. Thus, if a wind shear can be estimated by some measure, the fatigue load of the wind turbine generator 1 can be calculated based on the estimated value. Generally, the wind shear is measured using an observation mast or a remote sensing where anemometers are provided at a plurality of altitudes, both of which are however expensive. Thus, in the embodiment, the wind shear is estimated using a monitoring data of the status of the wind turbine generator 1 such as the wind speed, power output, pitch angle and the like.

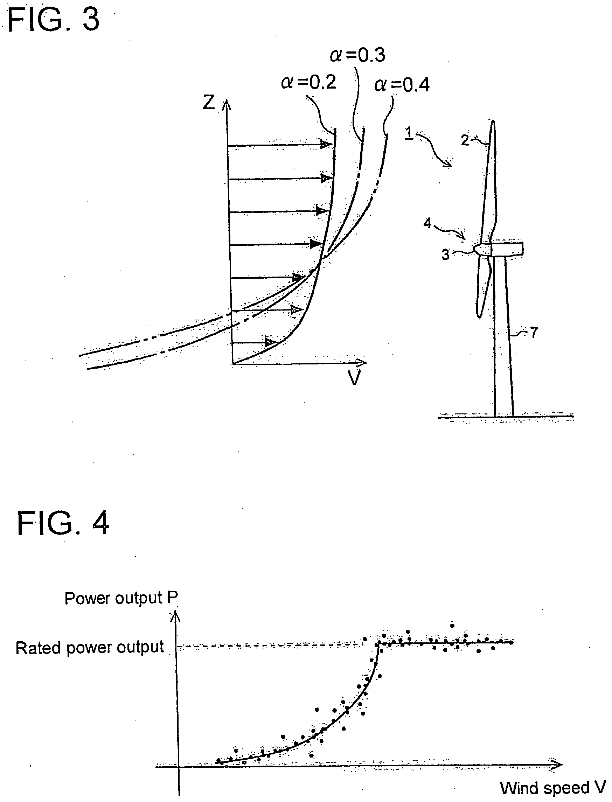

Fig. 3 is an illustration of a wind shear.

In one embodiment, the wind shear is identified utilizing the change of the power output of the wind turbine generator 1 caused by the change of wind energy which flows into the rotor plane even while the wind speed stays constant over the height direction of the hub due to the presence of the wind shear. As shown in Fig. 3, in a common wind turbine generator 1 of an upwind type, wind energy which can be converted into rotation energy at the rotor 4 tends to decrease in accordance with increase of the power law exponent $\alpha$ which is a parameter showing the wind shear. That is, there is a correlation in which the power output of the wind turbine generator 1 decreases as the power law exponent $\alpha$ increases,.

The power law exponent can be obtained using the above correlation.

That is, the power law exponent $\alpha$ is identified based on the wind speed obtained by the wind obtaining unit 11, and one of the power output obtained by the power output obtaining unit 12 or the pitch angle obtained by the pitch angle obtaining unit 13.

Specifically, an output curve as shown in Fig. 4 can be obtained from the wind speed V obtained by the wind speed obtaining unit 11 and the power output P of the wind turbine generator 1 obtained by the power output obtaining unit 12, the power output P being measured upon occurrence of the wind speed. Then, using the first correlation table 19 stored in the memory unit 18, a power law exponent $\alpha$ which corresponds to the output curve is extracted.

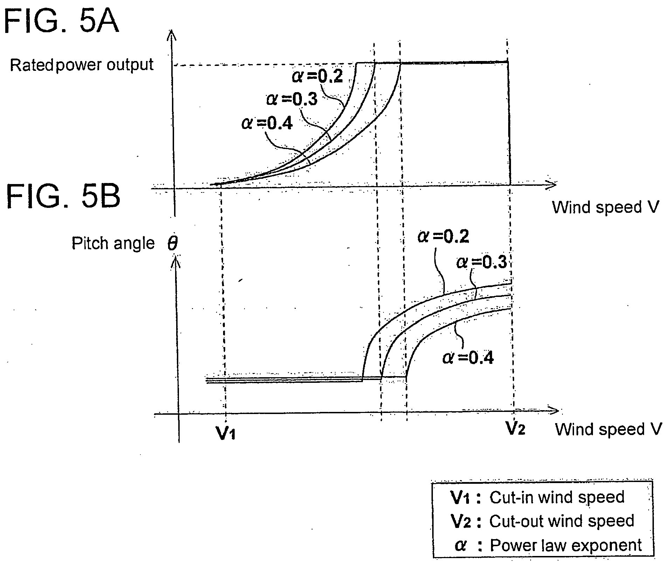

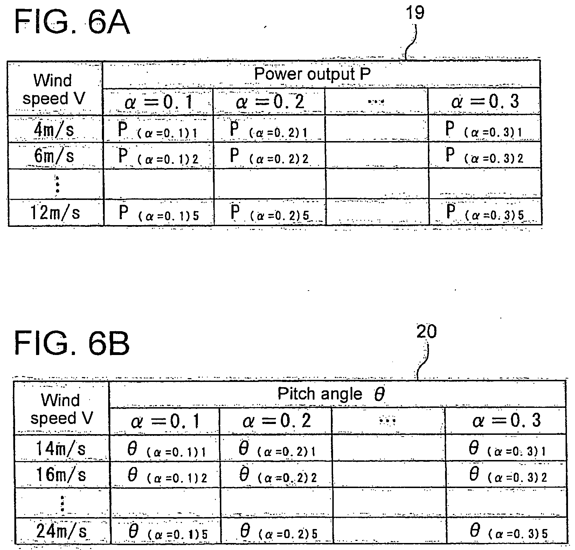

Fig. 5A is an illustration of an output curve corresponding to a power law exponent. Fig. 5B is an illustration of a correlation between wind speed and pitch angle corresponding to a power law exponent. Fig. 6A is an illustration of an exemplary configuration of a first correlation table. Fig. 6B is an illustration of an exemplary configuration of a second correlation table.

Herein, the first correlation table 19 shown in Fig. 5A and Fig. 6A will be described. As shown in Fig. 5A, when the power output of the wind turbine generator 1 is not greater than the rated power output (partial load), the power law exponent $\alpha$ and the power output P which corresponds to the wind speed V have a correlation in which the power output P of the wind turbine generator 1 decreases as the power law exponent $\alpha$ increases. In the embodiment, this correlation is referred to as the first correlation. An example of a data table generated based on the first correlation is illustrated in Fig. 6A. In the first correlation table 19 shown in the drawing, the power output P which corresponds to the wind speed V is stored with respect to each power law exponent $\alpha$. For instance, as a power output P corresponding to the wind speed V=4m/s, the power output $P_{(\alpha=0.1)1}$ is associated with the power law exponent $\alpha=0.1$, and the power output $P_{(\alpha=0.2)1}$ is associated with the power law exponent $\alpha=0.2$. Normally, when the power output of the wind turbine generator 1 is not greater than the rated output, the power output $P_{(\alpha=0.1)1}$ and the power output $P_{(\alpha=0.2)1}$ indicate different values. Thus, it is possible to derive a power law exponent $\alpha$ unambiguously from the power output P which corresponds to the wind speed V.

On the other hand, during the rated power output of the wind turbine generator 1 (full load), the pitch angle $\theta$ normally changes in accordance with the power law exponent $\alpha$ in order to keep the power output of the wind turbine generator 1 constant, the pitch angle $\theta$ being the control amount of the wind turbine generator 1. By utilizing this relationship, it is possible to back calculate (identify) the power law exponent $\alpha$ based on the pitch angle $\theta$ similarly to the above described power output P. As shown in Fig. 5B, during the rated power output of the wind turbine generator 1, as the pitch angle $\theta$ of the blade 2 is controlled to decrease as the power law exponent $\alpha$ increases, the power law exponent $\alpha$ and the pitch angle $\theta$ of the blade 2 have a correlative relationship. In the embodiment, this correlation is referred to as the second correlation. An example of a data table generated based on the second correlation is illustrated in Fig. 6B. In the second correlation table 20 shown in the drawing, the pitch angle $\theta$ corresponding to the wind speed V is stored with respect to each power law exponent $\alpha$. For instance, as the pitch angle $\theta$ which corresponds to the wind speed V=14m/s, the pitch angle $\theta_{(\alpha=0.1)1}$ is associated with the power law exponent $\alpha=0.1$, and the pitch angle $\theta_{(\alpha=0\cdot2)1}$ is associated with the power law exponent $\alpha=0.2$. Normally, during the rated power output of the wind turbine generator 1, the pitch angle $\theta_{(\alpha=0\cdot1)1}$ and the pitch angle $\theta_{(\alpha=0\cdot2)1}$ indicate different values. Thus, it is possible to derive a power law exponent $\alpha$ unambiguously from the pitch angle 8 which corresponds to the wind speed V.

Accordingly, at least when the power output of the wind turbine generator 1 is not greater than the rated power output, the change of the wind condition parameter appears in the change of the power output which corresponds to the wind speed, which makes it possible to certainly identify the wind condition parameter by considering the first correlation between the wind speed and the power output (the first correlation table 19). That is, even though the wind speed stays constant, different wind condition parameters lead to different power outputs, thus making it possible to identify the wind condition parameter which corresponds to the wind speed by using the change of the power output. Further, at least when the power output of the wind turbine generator 1 is not less than the rated power output, it is possible to certainly identify the wind condition parameter by considering the second correlation between the wind speed and the pitch angle (the second correlation table 20). That is, even though the wind speed stays constant, different wind condition parameters lead to different pitch angles, thus making it possible to identify the wind condition parameter which corresponds to the wind speed by using the change of the pitch angle.

Also, the first correlation table 19 or the second correlation table 20 may be provided with respect to each wind turbulence intensity. In this case, an appropriate first correlation table 19 or second correlation table 20 is selected based on the wind turbulence intensity obtained at the wind speed obtaining unit 11.

While a wind turbine generator 1 of an upwind type is illustrated in the above embodiment, the above configuration can be applied to a wind turbine generator 1 of a downwind type. In the case of a downwind wind turbine generator, there is a case where the power output increases in accordance with increase of the power law exponent $\alpha$. However, as the power law exponent $\alpha$ is correlated with the power output P or the pitch angle $\theta$ which corresponds to the wind speed, it is possible to identify the power law exponent $\alpha$ as described above.

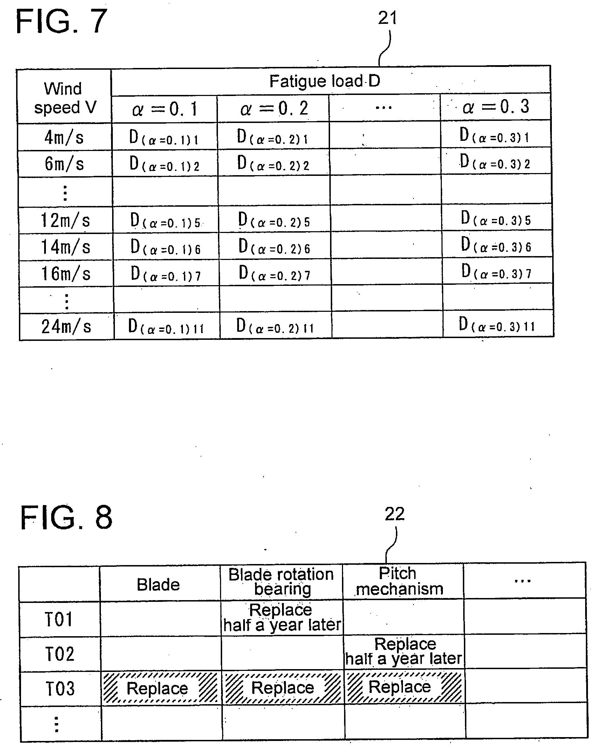

Then, using the power law exponent $\alpha$ identified as described above, the fatigue load of a component of a wind turbine generator 1 is calculated at the fatigue load calculating unit 15. In one embodiment, the fatigue load may be calculated using the fatigue load table 21 shown in Fig. 7. In the fatigue load table 21, a fatigue load DEL, which is referred to as a fatigue load D hereinafter and which corresponds to the wind speed V is stored with respect to each power law exponent $\alpha$. For example, as a fatigue load D which corresponds to the wind speed V=6m/s, the fatigue load $D_{(\alpha=0.1)1}$ is associated with the power law exponent $\alpha=0.1$, and the fatigue load $D_{(\alpha=0.2)1}$ is associated with the power law exponent $\alpha=0.2$. With the fatigue load table 21, a fatigue load D which corresponds to the power law exponent $\alpha$ obtained by the identification is extracted. As a result, it is possible to estimate the lifetime or the time for replacement from the measured power output of the wind turbine.

According to the monitoring system 10, it is possible to accurately calculate the fatigue load of a component of a wind turbine generator 1 without using a load measurement device or many anemometers, by using a monitoring data of the status of the wind turbine generator 1 (for instance, the wind speed, the wind turbulence intensity, at least one of the wind shear or the upflow angle, at least one of the power output or the pitch angle of the wind turbine generator 1, and the like).

Further, the monitoring system 10 may further include the following configuration.

In some embodiments, the monitoring system 10 further includes a lifetime estimating unit 16 for estimating a lifetime of a component of the wind turbine generator 1 based on the fatigue load calculated by the fatigue load calculating unit 15. For instance, the lifetime can be estimated using the fatigue load with the following equation (1).
[Equation 1]

$$T_{site} = \left(\frac{L_{site}}{L_{design}}\right)^{-m} T_{design} \qquad \cdots \ (1)$$

Herein, in the equation (1), $T_{site}$ is an estimate lifetime, $T_{design}$ is a design lifetime (a durable period), $L_{site}$ is an estimated value of the fatigue load calculated at the fatigue load calculating unit 15, and $L_{design}$ is a design fatigue load.

As a result, it is possible to perform estimation of the lifetime of the component with high accuracy by utilizing the fatigue load of a component of the wind turbine generator 1 calculated based on the condition of the wind which acts on the monitored wind turbine generator 1 (the wind condition parameter).

In one embodiment, the monitoring system 10 may further comprise a maintenance information outputting unit 17 for outputting information which encourages maintenance of a component of the wind turbine generator 1 based on the lifetime estimated by the lifetime estimating unit 16. For instance, the maintenance information outputting unit 17 may output a preferable maintenance time using a maintenance information table shown in Fig. 8. In the maintenance information table 22, a lifetime T01, T02, and so on of a component of the wind turbine generator 1 associated with a maintenance information (for instance, a suggested maintenance time) is stored. As a result, it is possible to perform maintenance of the wind turbine generator 1 at an appropriate time.

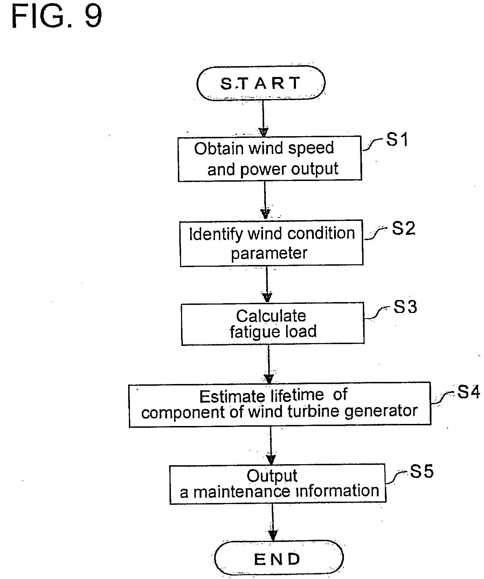

Fig. 9 is a flow chart of a monitoring method of a wind turbine generator according to one embodiment.

A monitoring method of the wind turbine generator 1 according to one embodiment will be described in reference to Fig. 9, illustrating a case where the wind shear is used as the wind condition parameter and the power output or the pitch angle is used upon identifying the wind condition parameter.

First, in the wind speed obtaining step, the monitoring system 10 obtains the wind speed measured at the anemometer 8 and also obtains the power output of the wind turbine generator 1 (S1). For instance, a power output curve of the wind turbine generator 1 as shown in Fig. 4 may be obtained.

Next, in the wind condition identifying step, based on the wind speed obtained in the wind speed obtaining step and at least one of the power output or the pitch angle of the wind turbine generator 1 measured upon occurrence of the wind speed, the monitoring system 10 identifies the wind condition parameter which includes at least one of the wind shear or the upflow angle of the wind acting on the rotor 4 of the wind turbine generator 1 (S2). On this occasion, the power output curve P (V) or the pitch angle schedule θ (V) may be calculated in advance as a table with respect to wind speed V (see Fig. 6A, 6B) where the power law exponent α and the wind turbulence intensity TI are the parameters, and then the power law exponent α as the wind condition parameter may be identified using the table. For the calculation of the table, an aeroelastic response analysis tool based on the blade element momentum theory and the like may be used, such as BLADED, FAST, HAWC2, etc. Herein, the power output curve P (V) or the pitch angle schedule θ (V) is given by the correlations including following parameters.
[Equation 2]

$$P(V) = f(V, \alpha, TI) \qquad \cdots \ (2)$$

$$\theta(V) = f(V, \alpha, TI) \qquad \cdots \ (3)$$

Specifically, when the power output is not greater than the rated power output, the power law exponent α is identified from the actual measured value of the power output P with respect to each wind speed V in reference to the table shown in Fig. 6A or 6B. Herein, the wind speed measured by the anemometer 8 may be processed and used as a wind turbulence intensity. Likewise, the power law exponent α is identified from the pitch angle θ with respect to each wind speed V. When the power output is not less than the rated power output, the power law exponent α is identified from the controlled value of the pitch angle θ with respect to each wind speed V.

Next, in the fatigue load calculating step, based on at least the wind condition parameter identified in the wind condition identifying step and the wind turbulence intensity of the wind acting on the rotor 4, the fatigue load of a component of the wind turbine generator 1 is calculated (S3). On this occasion, the fatigue load DEL (V) may be calculated in advance as a table with respect to wind speed V (see Fig. 7) where the power law exponent α and the wind turbulence intensity TI are the parameters, and then the fatigue load may be calculated using the table. For the calculation of the table, an aeroelastic response analysis tool based on the blade element momentum theory and the like may be used, such as BLADED, FAST, HAWC2, etc. Herein, the fatigue load DEL (V) is given by the correlation including the following parameters.
[Equation 3]

$$DEL(V) = f(V, \alpha, TI) \qquad \cdots \ (4)$$

Specifically, using the fatigue load table 21 shown in Fig. 7, a fatigue load D which corresponds to the power law exponent α identified in the wind condition identifying step is extracted with respect to each wind speed V. Then, the fatigue load D at each wind speed V is thoroughly calculated using the wind occurrence ratio, thereby deriving a full-year fatigue load L$_{site}$.

Also, in the monitoring method for a wind turbine generator 1, in the lifetime estimating step, based on the fatigue load calculated in the fatigue load calculating step, the lifetime of a component of the wind turbine generator 1 may be estimated (S4). In this case, the lifetime can be estimated from the fatigue load by the above equation (1).

Moreover, in the monitoring method for a wind turbine generator 1, in the maintenance information outputting step, based on the lifetime of a component estimated in the lifetime estimating step, an information for encouraging maintenance of the component may be outputted (S5). In this case, the information for encouraging maintenance of the component may be outputted using the maintenance information table 22 shown in Fig. 8.

While the above embodiment illustrates in detail a case where the wind shear is used as the wind condition parameter and the power output of the wind turbine generator 1 is used for identifying the wind condition parameter, the embodiment is not limited to this configuration. The upflow angle may be used as the wind condition parameter instead of the wind shear, or both of the wind shear and the upflow angle may be used. Also, for identifying the wind condition parameter, the pitch angle may be used instead of the power output of the wind turbine generator 1, or both of the power output and the pitch angle may be used.

As described above, according to the embodiment, it is possible to calculate the fatigue load of a component of the wind turbine generator 1 with high accuracy without using a load measurement device or many anemometers by using a monitoring data of the status of the wind turbine generator 1 such as the wind speed, the wind turbulence intensity, at least one of the wind shear or the upflow angle, and at least one of the power output or the pitch angle of the wind turbine generator 1, and the like.

Further, the monitoring system according to the above embodiment may be applied to a wind farm which includes a plurality of wind turbine generators. That is, a monitoring system for a wind farm according to one embodiment comprises:

a wind speed obtaining unit for obtaining a wind speed for each of wind turbine generators belonging to the wind farm (the wind speed obtaining unit in Fig.1);
a wind condition identifying unit for identifying a wind condition parameter for each of the wind turbine generators based on the wind speed obtained by the wind speed obtaining unit and at least one of a power output or a pitch angle of each of the wind turbine generators measured upon occurrence of the wind speed, the wind condition parameter including at least one of a wind shear or an upflow angle of a wind which acts on a rotor of each of the wind turbine generators (the wind condition identifying unit 14 in Fig. 1); and
a fatigue load calculating unit for calculating a fatigue load of a component of each of the wind turbine generators based on at least the wind condition parameter identified by the wind condition identifying unit and a wind turbulence intensity of the wind which acts on the rotor (the fatigue load calculating unit 15 in Fig. 1).

According to the monitoring system for a wind farm, it is possible to calculate the fatigue load of a component of each of the wind turbine generators with high accuracy with respect to each of the wind turbine generators without using a load measurement device or many anemometers by using a monitoring data of the status of each of the wind turbine generators.

The monitoring system for a wind farm may also include the lifetime estimating unit 16, the maintenance information outputting unit 17 etc, and the configuration of the above described monitoring system 10 may be applied.

[Reference Signs list]

| | |
|---|---|
| 1 | Wind turbine generator |
| 2 | Blade |
| 3 | Hub |
| 4 | Rotor |
| 5 | Generator |
| 6 | Nacelle |
| 7 | Tower |
| 8 | Anemometer |
| 9 | Pitch angle control mechanism |
| 10 | Monitoring system |
| 11 | Wind speed obtaining unit |
| 12 | Power output obtaining unit |
| 13 | Pitch angle obtaining unit |
| 14 | Wind condition identifying unit |
| 15 | Fatigue load calculating unit |
| 16 | Lifetime estimating unit |
| 17 | Maintenance information outputting unit |
| 18 | Memory unit |
| 19 | First correlation table |
| 20 | Second correlation table |
| 21 | Fatigue load table |
| 22 | Maintenance information table |

**Claims**

1. A monitoring system (10) for a wind turbine generator (1), **characterized by** comprising:

a wind speed obtaining unit (11) for obtaining a wind speed;
a wind condition identifying unit (14) for identifying a wind condition parameter which includes at least one of a wind shear or an upflow angle of a wind which acts on a rotor (4) of the wind turbine generator (1) based on the wind speed obtained by the wind speed obtaining unit (11) and at least one of a power output or a pitch angle of the wind turbine generator (1) measured upon occurrence of the wind speed; and a fatigue load calculating unit (15) for calculating a fatigue load of a component of the wind turbine generator (1) based on at least the wind condition parameter identified by the wind condition identifying unit (14) and a wind turbulence intensity of the wind which acts on the rotor (4).

2. The monitoring system (10) for a wind turbine generator (1) according to claim 1,
   wherein the wind condition identifying unit (14) is configured to identify the wind condition parameter by applying the wind speed obtained by the wind speed obtaining unit (11) and at least one of the power output and the pitch angle measured upon occurrence of the wind speed to a correlation among: the wind speed; at least one of the power output or the pitch angle of the wind turbine generator (1); and the wind condition parameter including at least one of the wind shear or the upflow angle of the wind which acts on the rotor (4).

3. The monitoring system (10) for a wind turbine generator (1) according to claim 1 or 2,
   wherein the wind condition identifying unit (14) is configured to identify the wind condition parameter based on the wind turbulence intensity of the wind which acts on the rotor (4) in addition to the wind speed and at least one of the output power or the pitch angle of the wind turbine generator (1) measured upon occurrence of the wind speed.

4. The monitoring system (10) for a wind turbine generator (1) according to any of claims 1 to 3,
   wherein the wind condition identifying unit (14) is configured to identify the wind condition parameter based on at least a first correlation of the wind speed and the power output where the power output is not greater than a rated power output of the wind turbine generator (1).

5. The monitoring system (10) for a wind turbine generator (1) according to any of claims 1 to 4,
   wherein the wind condition identifying unit (14) is configured to identify the wind condition parameter based on at least a second correlation of the wind speed and the pitch angle where the power output is not less than a rated power output of the wind turbine generator(1).

6. The monitoring system (10) for a wind turbine generator (1) according to any of claims 1 to 5, further comprising a lifetime estimating unit (16) for estimating a lifetime of the component based on the fatigue load calculated by the fatigue load calculating unit (15).

7. The monitoring system (10) for a wind turbine generator (1) according to claim 6, further comprising a maintenance information outputting unit (17) for outputting information which encourages maintenance of the component based on the lifetime estimated by the lifetime estimating unit (16).

8. The monitoring system (10) for a wind turbine generator (1) according to any of claims 1 to 7, wherein the wind speed obtaining unit (11) is configured to obtain the wind speed based on a measured result of an anemometer (8) provided on a nacelle (6) of the wind turbine generator (1).

9. A monitoring system for a wind farm, **characterized by** comprising:

   a wind speed obtaining unit (11) for obtaining a wind speed for each of the wind turbine generators (1) belonging to the wind farm;
   a wind condition identifying unit (14) for identifying a wind condition parameter for each of the wind turbine generators (1) based on the wind speed obtained by the wind speed obtaining unit (11) and at least one of a power output or a pitch angle of each of the wind turbine generators (1) measured upon occurrence of the wind speed, the wind condition parameter including at least one of a wind shear or an upflow angle of a wind which acts on a rotor (4) of each of the wind turbine generators (1); and
   a fatigue load calculating unit (15) for calculating a fatigue load of a component of each of the wind turbine generators (1) based on at least the wind condition parameter identified by the wind condition identifying unit (14) and a wind turbulence intensity of the wind which acts on the rotor (4).

10. A monitoring method for a wind turbine generator (1), comprising:

    a wind speed obtaining step of obtaining a wind speed;
    a wind condition identifying step of identifying a wind condition parameter which includes at least one of a wind shear or an upflow angle of a wind which acts on a rotor (4) of the wind turbine generator (1) based on the wind speed obtained in the wind speed obtaining step and at least one of a power output or a pitch angle of the wind turbine generator (1) measured upon occurrence of the wind speed; and

a fatigue load calculating step of calculating a fatigue load of a component of the wind turbine generator (1) based on at least the wind condition parameter identified in the wind condition identifying step and a wind turbulence intensity of the wind which acts on the rotor (4).

**Patentansprüche**

1. Überwachungssystem (10) für eine Windenergieanlage (1), **dadurch gekennzeichnet, dass** es umfasst:

   eine Windgeschwindigkeitserfassungseinheit (11) zum Erfassen einer Windgeschwindigkeit, eine Windbedingungsbestimmungseinheit (14) zum Bestimmen eines Windbedingungsparameters, der mindestens einen aus der Gruppe umfassend eine Windscherung und einen Aufwärtsströmungswinkel eines Winds, der auf einen Rotor (4) der Windenergieanlage (1) wirkt, umfasst, auf der Basis der durch die Windgeschwindigkeitserfassungseinheit (11) erfassten Windgeschwindigkeit und von mindestens einem aus der Gruppe umfassend eine Ausgangsleistung und einen Pitchwinkel der Windenergieanlage (1), die bei Eintreten der Windgeschwindigkeit gemessen werden, und eine Ermüdungslastberechnungseinheit (15) zum Berechnen einer Ermüdungslast einer Komponente der Windenergieanlage (1) auf der Basis von mindestens dem durch die Windbedingungsbestimmungseinheit (14) bestimmten Windbedingungsparameter und einer Windturbulenzstärke des auf den Rotor (4) wirkenden Winds.

2. Überwachungssystem (10) für eine Windenergieanlage (1) nach Anspruch 1, wobei die Windbedingungsbestimmungseinheit (14) dazu ausgebildet ist, den Windbedingungsparameter zu bestimmen: durch Anwenden der durch die Windgeschwindigkeitserfassungseinheit (11) erfassten Windgeschwindigkeit und von mindestens einem aus der Gruppe umfassend die Ausgangsleistung und den Pitchwinkel, die bei Eintreten der Windgeschwindigkeit gemessen werden, auf eine Korrelation zwischen: der Windgeschwindigkeit; mindestens einem aus der Gruppe umfassend die Ausgangsleistung und den Pitchwinkel der Windenergieanlage (1), und dem Windbedingungsparameter, der mindestens einen aus der Gruppe umfassend die Windscherung und den Aufwärtsströmungswinkel eines Winds, der auf einen Rotor (4) wirkt, umfasst.

3. Überwachungssystem (10) für eine Windenergieanlage (1) nach Anspruch 1 oder 2, wobei die Windbedingungsbestimmungseinheit (14) dazu ausgebildet ist, den Windbedingungsparameter auf der Basis der Windturbulenzstärke des Winds, der auf den Rotor (4) wirkt, zusätzlich zu der Windgeschwindigkeit und mindestens einem aus der Gruppe umfassend die Ausgangsleistung und den Pitchwinkel der Windenergieanlage (1), die bei Eintreten der Windgeschwindigkeit gemessen werden, zu bestimmen.

4. Überwachungssystem (10) für eine Windenergieanlage (1) nach einem beliebigen der Ansprüche 1 bis 3, wobei die Windbedingungsbestimmungseinheit (14) dazu ausgebildet ist, den Windbedingungsparameter auf der Basis von mindestens einer ersten Korrelation der Windgeschwindigkeit und der Ausgangsleistung zu bestimmen, falls die Ausgangsleistung nicht größer als eine Nennausgangsleistung der Windenergieanlage (1) ist.

5. Überwachungssystem (10) für eine Windenergieanlage (1) nach einem beliebigen der Ansprüche 1 bis 4, wobei die Windbedingungsbestimmungseinheit (14) dazu ausgebildet ist, den Windbedingungsparameter auf der Basis von mindestens einer zweiten Korrelation der Windgeschwindigkeit und des Pitchwinkels zu bestimmen, falls die Ausgangsleistung nicht kleiner als eine Nennausgangsleistung der Windenergieanlage (1) ist.

6. Überwachungssystem (10) für eine Windenergieanlage (1) nach einem beliebigen der Ansprüche 1 bis 5, ferner umfassend eine Lebensdauerschätzeinheit (16) zum Schätzen einer Lebensdauer der Komponente auf der Basis der durch die Ermüdungslastberechnungseinheit (15) berechneten Ermüdungslast.

7. Überwachungssystem (10) für eine Windenergieanlage (1) nach Anspruch 6, ferner umfassend eine Wartungsinformationsausgabeeinheit (17) zum Ausgeben von Informationen, welche die Wartung der Komponente auf der Basis der durch die Lebensdauerschätzeinheit (16) geschätzten Lebensdauer unterstützen.

8. Überwachungssystem (10) für eine Windenergieanlage (1) nach einem beliebigen der Ansprüche 1 bis 7, wobei die Windgeschwindigkeitserfassungseinheit (11) dazu ausgebildet ist, die Windgeschwindigkeit auf der Basis eines Messergebnisses eines Anemometers (8), das an einer Gondel (6) der Windenergieanlage (1) vorgesehen ist, zu erfassen.

**9.** Überwachungssystem für einen Windpark, **dadurch gekennzeichnet, dass** es umfasst:

eine Windgeschwindigkeitserfassungseinheit (11) zum Erfassen einer Windgeschwindigkeit für jede der zu dem Windpark gehörenden Windenergieanlagen (1),
eine Windbedingungsbestimmungseinheit (14) zum Bestimmen eines Windbedingungsparameters für jede der Windkraftanlagen (1) auf der Basis der durch die Windgeschwindigkeitserfassungseinheit (11) erfassten Windgeschwindigkeit und von mindestens einem aus der Gruppe umfassend eine Ausgangsleistung und einen Pitchwinkel von jeder der Windenergieanlagen (1), die bei Eintreten der Windgeschwindigkeit gemessen werden, wobei der Windbedingungsparameter mindestens einen aus der Gruppe umfassend eine Windscherung und einen Aufwärtsströmungswinkel eines Winds, der auf einen Rotor (4) von jeder der Windenergieanlagen (1) wirkt, umfasst, und
eine Ermüdungslastberechnungseinheit (15) zum Berechnen einer Ermüdungslast einer Komponente von jeder der Windenergieanlagen (1) auf der Basis von mindestens dem durch die Windbedingungsbestimmungseinheit (14) bestimmten Windbedingungsparameter und einer Windturbulenzstärke des auf den Rotor (4) wirkenden Winds.

**10.** Überwachungsverfahren für eine Windenergieanlage (1), umfassend:

einen Windgeschwindigkeitserfassungsschritt zum Erfassen einer Windgeschwindigkeit,
einen Windbedingungsbestimmungsschritt zum Bestimmen eines Windbedingungsparameters, der mindestens einen aus der Gruppe umfassend eine Windscherung und einen Aufwärtsströmungswinkel eines Winds, der auf einen Rotor (4) der Windenergieanlage (1) wirkt, umfasst, auf der Basis der in dem Windgeschwindigkeitserfassungsschritt erfassten Windgeschwindigkeit und von mindestens einem aus der Gruppe umfassend eine Ausgangsleistung und einen Pitchwinkel der Windenergieanlage (1), die bei Eintreten der Windgeschwindigkeit gemessen werden, und
einen Ermüdungslastberechnungsschritt zum Berechnen einer Ermüdungslast einer Komponente der Windenergieanlage (1) auf der Basis von mindestens dem in dem Windbedingungsbestimmungsschritt bestimmten Windbedingungsparameter und einer Windturbulenzstärke des auf den Rotor (4) wirkenden Winds.

## Revendications

**1.** Système de surveillance (10) pour une éolienne (1), **caractérisé en ce qu'**il comporte :

une unité d'obtention de vitesse du vent (11) destinée à obtenir une vitesse du vent ;
une unité d'identification de condition de vent (14) destinée à identifier un paramètre de condition de vent qui comprend au moins un d'un cisaillement du vent ou d'un angle d'écoulement ascendant d'un vent qui agit sur un rotor (4) de l'éolienne (1) sur la base de la vitesse du vent obtenue par l'unité d'obtention de vitesse du vent (11) et au moins un d'une puissance de sortie ou d'un angle de pas de l'éolienne (1) mesuré lors de l'apparition de la vitesse du vent ; et
une unité de calcul de charge de fatigue (15) destinée à calculer une charge de fatigue d'un composant de l'éolienne (1) sur la base de au moins le paramètre de condition de vent identifié par l'unité d'identification de condition de vent (14) et une intensité de turbulence de vent du vent qui agit sur le rotor (4).

**2.** Système de surveillance (10) pour une éolienne (1) selon la revendication 1,
dans lequel l'unité d'identification de condition de vent (14) est configurée pour identifier le paramètre de condition de vent en appliquant la vitesse du vent obtenue par l'unité d'obtention de vitesse du vent (11) et au moins un de la puissance de sortie et de l'angle de pas mesurés lors de l'apparition de la vitesse du vent avec une corrélation parmi : la vitesse du vent ; au moins un de la puissance de sortie ou de l'angle de pas de l'éolienne (1) ; et le paramètre de condition de vent comprenant au moins un du cisaillement du vent ou de l'angle d'écoulement ascendant du vent qui agit sur le rotor (4).

**3.** Système de surveillance (10) pour une éolienne (1) selon la revendication 1 ou 2,
dans lequel l'unité d'identification de condition de vent (14) est configurée pour identifier le paramètre de condition de vent sur la base de l'intensité de turbulence de vent du vent qui agit sur le rotor (4) en plus de la vitesse du vent et au moins un de la puissance de sortie ou de l'angle de pas de l'éolienne (1) mesurés lors de l'apparition de la vitesse du vent.

**4.** Système de surveillance (10) pour une éolienne (1) selon l'une quelconque des revendications 1 à 3,
dans lequel l'unité d'identification de condition de vent (14) est configurée pour identifier le paramètre de condition de vent sur la base de au moins une première corrélation de la vitesse du vent et de la puissance de sortie où la puissance de sortie n'est pas supérieure à une puissance de sortie nominale de l'éolienne (1).

**5.** Système de surveillance (10) pour une éolienne (1) selon l'une quelconque des revendications 1 à 4, dans lequel l'unité d'identification de condition de vent (14) est configurée pour identifier le paramètre de condition de vent sur la base de au moins une deuxième corrélation de la vitesse du vent et de l'angle de pas où la puissance de sortie n'est pas inférieure à une puissance de sortie nominale de l'éolienne (1).

**6.** Système de surveillance (10) pour une éolienne (1) selon l'une quelconque des revendications 1 à 5, comportant en outre une unité d'estimation de durée de vie (16) destinée à estimer une durée de vie du composant sur la base de la charge de fatigue calculée par l'unité de calcul de charge de fatigue (15).

**7.** Système de surveillance (10) pour une éolienne (1) selon la revendication 6, comportant en outre une unité de sortie d'information d'entretien (17) destinée à délivrer de l'information qui encourage l'entretien du composant sur la base de la durée de vie estimée par l'unité d'estimation de durée de vie (16).

**8.** Système de surveillance (10) pour une éolienne (1) selon l'une quelconque des revendications 1 à 7, dans lequel l'unité d'obtention de vitesse du vent (11) est configurée pour obtenir la vitesse du vent sur la base d'un résultat mesuré d'un anémomètre (8) prévu sur une nacelle (6) de l'éolienne (1).

**9.** Système de surveillance pour une ferme éolienne, **caractérisé en ce qu'**il comporte :

une unité d'obtention de vitesse du vent (11) destinée à obtenir une vitesse du vent pour chacune des éoliennes (1) appartenant à la ferme éolienne ;
une unité d'identification de condition de vent (14) destinée à identifier un paramètre de condition de vent pour chacune des éoliennes (1) sur la base de la vitesse du vent obtenue par l'unité d'obtention de vitesse du vent (11) et de au moins un d'une puissance de sortie ou d'un angle de pas de chacune des éoliennes (1) mesurés lors de l'apparition de la vitesse du vent, le paramètre de condition de vent comprenant au moins un d'un cisaillement du vent ou d'un angle d'écoulement ascendant d'un vent qui agit sur un rotor (4) de chacune des éoliennes (1) ; et
une unité de calcul de charge de fatigue (15) destinée à calculer une charge de fatigue d'un composant de chacune des éoliennes (1) sur la base de au moins le paramètre de condition de vent identifié par l'unité d'identification de condition de vent (14) et une intensité de turbulence de vent du vent qui agit sur le rotor (4).

**10.** Procédé de surveillance pour une éolienne (1), comportant :

une étape d'obtention de vitesse du vent destinée à obtenir une vitesse du vent ;
une étape d'identification de condition de vent destinée à identifier un paramètre de condition de vent qui comprend au moins un d'un cisaillement du vent ou d'un angle d'écoulement ascendant d'un vent qui agit sur un rotor (4) de l'éolienne (1) sur la base de la vitesse du vent obtenue dans l'étape d'obtention de vitesse du vent et au moins un d'une puissance de sortie ou d'un angle de pas de l'éolienne (1) mesurés lors de l'apparition de la vitesse du vent ; et
une étape de calcul de charge de fatigue destinée à calculer une charge de fatigue d'un composant de l'éolienne (1) sur la base de au moins le paramètre de condition de vent identifié dans l'étape d'identification de condition de vent et une intensité de turbulence de vent du vent qui agit sur le rotor (4).

# FIG. 1

11: Wind speed obtaining unit

12: Power output obtaining unit

13: Pitch angle obtaining unit

10 Monitoring system

18 Memory unit

19 First correlation Table

20 Second correlation Table

21 Fatigue load table

14: Wind condition identifying unit

15: Fatigue load calculating unit

16: Lifetime estimating unit

17: Maintenance information outputting unit

EP 2 886 853 B1

# FIG. 2

Inflow wind = Wind shear + Wind turbulence intensity

EP 2 886 853 B1

# FIG. 3

# FIG. 4

## FIG. 5A

Rated power output

$\alpha = 0.2$

$\alpha = 0.3$

$\alpha = 0.4$

## FIG. 5B

Wind speed V

Pitch angle $\theta$

$\alpha = 0.2$

$\alpha = 0.3$

$\alpha = 0.4$

V1

V2    Wind speed V

V1 : Cut-in wind speed
V2 : Cut-out wind speed
$\alpha$ : Power law exponent

# FIG. 6A

19

| Wind speed V | Power output P | | | |
|---|---|---|---|---|
| | $\alpha = 0.1$ | $\alpha = 0.2$ | ... | $\alpha = 0.3$ |
| 4m/s | $P_{(\alpha=0.1)1}$ | $P_{(\alpha=0.2)1}$ | | $P_{(\alpha=0.3)1}$ |
| 6m/s | $P_{(\alpha=0.1)2}$ | $P_{(\alpha=0.2)2}$ | | $P_{(\alpha=0.3)2}$ |
| ⋮ | | | | |
| 12m/s | $P_{(\alpha=0.1)5}$ | $P_{(\alpha=0.2)5}$ | | $P_{(\alpha=0.3)5}$ |

# FIG. 6B

20

| Wind speed V | Pitch angle $\theta$ | | | |
|---|---|---|---|---|
| | $\alpha = 0.1$ | $\alpha = 0.2$ | ... | $\alpha = 0.3$ |
| 14m/s | $\theta_{(\alpha=0.1)1}$ | $\theta_{(\alpha=0.2)1}$ | | $\theta_{(\alpha=0.3)1}$ |
| 16m/s | $\theta_{(\alpha=0.1)2}$ | $\theta_{(\alpha=0.2)2}$ | | $\theta_{(\alpha=0.3)2}$ |
| ⋮ | | | | |
| 24m/s | $\theta_{(\alpha=0.1)5}$ | $\theta_{(\alpha=0.2)5}$ | | $\theta_{(\alpha=0.3)5}$ |

# FIG. 7

21

| Wind speed V | Fatigue load D | | | |
|---|---|---|---|---|
| | $\alpha = 0.1$ | $\alpha = 0.2$ | $\cdots$ | $\alpha = 0.3$ |
| 4m/s | $D_{(\alpha=0.1)1}$ | $D_{(\alpha=0.2)1}$ | | $D_{(\alpha=0.3)1}$ |
| 6m/s | $D_{(\alpha=0.1)2}$ | $D_{(\alpha=0.2)2}$ | | $D_{(\alpha=0.3)2}$ |
| $\vdots$ | | | | |
| 12m/s | $D_{(\alpha=0.1)5}$ | $D_{(\alpha=0.2)5}$ | | $D_{(\alpha=0.3)5}$ |
| 14m/s | $D_{(\alpha=0.1)6}$ | $D_{(\alpha=0.2)6}$ | | $D_{(\alpha=0.3)6}$ |
| 16m/s | $D_{(\alpha=0.1)7}$ | $D_{(\alpha=0.2)7}$ | | $D_{(\alpha=0.3)7}$ |
| $\vdots$ | | | | |
| 24m/s | $D_{(\alpha=0.1)11}$ | $D_{(\alpha=0.2)11}$ | | $D_{(\alpha=0.3)11}$ |

# FIG. 8

22

| | Blade | Blade rotation bearing | Pitch mechanism | $\cdots$ |
|---|---|---|---|---|
| T01 | | Replace half a year later | | |
| T02 | | | Replace half a year later | |
| T03 | Replace | Replace | Replace | |
| $\vdots$ | | | | |

# FIG. 9

START

Obtain wind speed
and power output — S1

Identify wind condition
parameter — S2

Calculate
fatigue load — S3

Estimate lifetime of
component of wind turbine generator — S4

Output
a maintenance information — S5

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011024304 A
- US 20130062880 A